(19) Europäisches Patentamt

European Patent Office

Office européen des brevets

(11) Publication number : **0 349 101 B1**

(12) **EUROPEAN PATENT SPECIFICATION**

(45) Date of publication of patent specification :
**29.01.92 Bulletin 92/05**

(51) Int. Cl.⁵ : **B61H 15/00**

(21) Application number : **89303910.7**

(22) Date of filing : **20.04.89**

(54) **Brake equipment.**

(30) Priority : **28.06.88 GB 8815374**

(43) Date of publication of application :
**03.01.90 Bulletin 90/01**

(45) Publication of the grant of the patent :
**29.01.92 Bulletin 92/05**

(84) Designated Contracting States :
**CH DE ES FR IT LI SE**

(56) References cited :
**EP-A- 0 033 599**
**EP-A- 0 091 151**
**FR-A- 2 238 386**

(73) Proprietor : **WESTINGHOUSE BRAKE AND SIGNAL HOLDINGS LIMITED**
**Pew Hill**
**Chippenham Wiltshire (GB)**

(72) Inventor : **Langley, Keith William**
**11 Bennetts Road**
**Swainswick Bath Avon (GB)**

(74) Representative : **MacFarlane, John Anthony Christopher et al**
**PAGE & CO Temple Gate House Temple Gate**
**Bristol BS1 6PL (GB)**

EP 0 349 101 B1

## Description

This invention relates to brake equipment and, more particularly to railway brake equipment known as "tread-brake units".

A tread-brake unit is a self-contained braking equipment comprising, in combination, a brake cylinder and a brake shoe. In some instances, the unit may also incorporate a slack adjuster. By the manner of positioning of tread-brake units, the envelope available for the unit is frequently very limited and, therefore, the design of tread-brake units is somewhat difficult. The difficulty is the greater if the unit is required to incorporate a slack adjuster.

According to the present invention there is provided a tread-brake unit comprising a brake piston and cylinder arrangement, a slack adjuster and a brake shoe ; characterised in that the piston of the brake piston and cylinder arrangement is mounted in the cylinder of the arrangement such that in operation of the arrangement the axis of the piston oscillates about the axis of the cylinder ; in that the axis of the cylinder is inclined with respect to the axis of the slack adjuster in the plane in which the axis of the piston is oscillatable about the axis of the cylinder ; and in that the piston rod of the piston is pivotally engaged with one end of a first lever pivotally mounted in the unit, this first lever being engageable with one end of a second, bell-crank, lever which is pivotally mounted at its elbow in the unit and is pivotally engaged at its other end with a part of the slack adjuster, movement of which within the unit effects, through the slack adjuster, operation of the brake shoe.

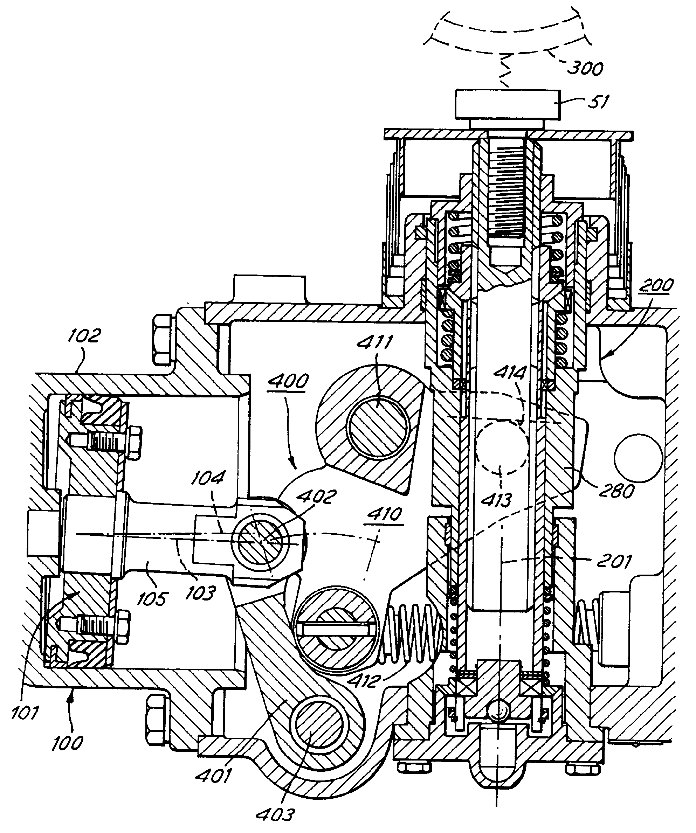

For a better understanding of the invention and to show how the same may be carried into effect, reference will now be made by way of example, to the accompanying drawing in which the single figure is a cross-sectional view of a tread-brake unit.

The tread-brake unit shown in the Figure includes a brake cylinder 100, a slack adjuster 200 and a brake shoe 300 (shown only schematically).

The brake cylinder 100 is of the type in which, in operation, a piston 101 oscillates in a cylinder 102 during its stroke such that the axis 103 of the piston 101 oscillates in the plane of the drawing about the axis 104 of the brake cylinder 100.

The slack adjuster 200 is of the type described in more detail in European Patent Application Nos. 89300696.5 and 89300697.3 and will not be described herein save to note that the part referenced 280 in the drawing accompanying this Application is the equivalent of the tubular piston rod 8 referred to in the co-pending Applications, this part being the part movement of which within the unit effects, through the slack adjuster, operation of the brake shoe 300.

The brake shoe 300 is of the construction of the brake shoe 300 shown in the Applications just mentioned, the cross-head referenced 51 in the drawing accompanying this Application being the cross-head similarly referenced in the mentioned Application.

It will be seen from the accompanying drawing that the axis 201 of the slack adjuster 200 is inclined at right angles to the axis 104 of the brake cylinder 100, also in the plane of the drawing.

To effect operation of the brake shoe 300 via the slack adjuster 200 by the brake cylinder 100, the brake cylinder 100 and the slack adjuster 200 are interconnected by a lever system 400. This system includes a first (first order) lever 401 pivotally connected at one end via a pin 402 to the piston rod 105 of the piston 101 of the brake cylinder 100 and pivotally mounted in the tread-brake unit at its other end by a pin 403. The system 400 further includes a second (second order) bell-crank lever 410 pivotally mounted at its elbow via a pin 411 in the tread-brake unit. The bell-crank lever 410 is resiliently loaded by a spring 412 such that one end of the bell-crank lever 410 is engaged with the first lever 401 mid-way between the pins 402 and 403. Adjacent its other end, the bell-crank lever 410 carries a roller 413 which bears against a shoulder 414 on the part 280 of the slack adjuster 200.

Reciprocation of the piston 101 of the brake cylinder 100 to effect application and release of the brakes pivots the lever 401 about pin 403 with the axis 103 of the piston 101 oscillating about the axis 104 of the brake cylinder 100. By virtue of its engagement by the bell-crank lever 410 (pivoting of the lever 401) pivots the bell-crank lever 410. Pivoting of the bell-crank lever 410 causes reciprocation of the part 280 of the slack adjuster 200. Reciprocation of the part 280, as described in the Applications mentioned above, reciprocates the tubular piston rod 8 to effect operation of the brake shoe 300 to apply and release the brakes and also effects, as necessary, operation of the slack adjuster 200 to take up any excess slack.

## Claims

1. A tread-brake unit comprising a brake piston and a brake cylinder arrangement (101/100), a slack adjuster (200) and a brake shoe (300) ; characterised in that the piston (101) of the brake piston and cylinder arrangement (101/100) is mounted in the cylinder (100) of the arrangement such that in operation of the arrangement (101/100) the axis (103) of the piston (101) oscillates about the axis (102) of the cylinder (100) ; in that the axis (104) of the cylinder (100) is inclined with the respect to the axis (201) of the slack adjuster (200) in the plane in which the axis (103) of the piston (101) is oscillatable about the axis (104) of the cylinder (100) ; and in that the piston rod (105) of the piston (101) is pivotally engaged with one end of a first lever (401) pivotally mounted in the unit, this first lever (401) being engageable with one end of a second, bell-crank, lever (410) which is pivotally mounted at its elbow in the unit and is pivotally engaged at its other end with a part (280) of the slack adjuster (200), movement of which within the unit effects, through the slack adjuster (200), operation of the brake shoe (300).

2. A tread-brake unit as claimed in claim 1, wherein the axis (201) of the cylinder (100) of the piston and cylinder arrangement (101/100) is inclined at right angles to the axis (201) of the slack adjuster (200).

**Patentansprüche**

1. Trittbremseinheit mit einer aus einem Bremskolben und einem Bremszylinder bestehenden Anordnung (101/100), mit einer Gestängenachstellvorrichtung (200) und mit einer Bremsbacke (300), dadurch gekennzeichnet, daß der Kolben (101) der Bremskolben- und Bremszylinderanordnung (101/100) in dem Zylinder (100) der Anordnung derart angeordnet ist, daß während des Betriebs der Anordnung (101/100) die Achse (103) des Kolbens (101) um die Achse (102) des Zylinders (100) oszilliert und daß die Achse (104) des Zylinders (100) zur Achse (201) der Gestängenachstellvorrichtung (200) in derjenigen Ebene geneigt ist, in welcher die Achse (103) des Kolbens (101) um die Achse (104) des Zylinders (100) oszillierbar ist, und daß die Kolbenstange (105) des Kolbens (101) mit dem einen Ende eines drehbar in der Einheit angeordneten ersten Hebels (401) drehbar verbunden ist, wobei der erste Hebel (401) mit einem Ende eines zweiten, winkelhebelartig ausgebildeten Hebels (410) in Eingriff zu bringen ist, welcher an seinem Winkelstück in der Einheit drehbar angeschlagen und an seinem anderen Ende drehbar mit einem Teil (280) der Gestängenachstellvorrichtung (200) verbunden ist, dessen Bewegung innerhalb der Einheit, durch die Gestängenachstellvorrichtung (200), die Funktion der Bremsbacke (300) bewirkt.

2. Trittbremseinheit nach Anspruch 1, bei welcher die Achse (201) des Zylinders (100) der Kolben- und Zylinderanordnung (101/100) in rechtem Winkel zur Achse (201) der Gestängenachstellvorrichtung (200) geneigt ist.

**Revendications**

1. Organe de freinage à sabot comprenant un piston de frein et un dispositif de cylindre de frein (101/100), un régleur automatique de timonerie (200) et un sabot de frein (300), caractérisé en ce que le piston (101) du dispositif à piston et cylindre (101/100) du frein est monté dans le cylindre (100) du dispositif de sorte que, durant le fonctionnement du dispositif, l'axe (103) du piston (101) oscille autour de l'axe (104) du cylindre (100), en ce que l'axe (104) du cylindre (100) est incliné par rapport à l'axe (201) du régleur automatique de timonerie (200) dans le plan dans lequel l'axe (103) du piston (101) oscille autour de l'axe (104) du cylindre (100), et en ce que la tige de piston (105) du piston (101) est en prise pivotante avec une extrémité d'un premier levier monté de manière pivotante dans l'organe, ce premier levier (401) pouvant être en contact avec une extrémité d'un second levier (410) de type coudé, monté de manière pivotante au niveau de son coude dans l'organe, et également en prise pivotante à son autre extrémité avec une pièce (280) du régleur automatique de timonerie (200), le mouvement de cette pièce provoquant, au sein de l'organe, le fonctionnement du sabot de frein (300) par l'intermédiaire du régleur automatique de timonerie (200).

2. Organe selon la revendication 1, caractérisé en ce que l'axe (104) du cylindre (100) du dispositif à pistons et cylindre (101/100) est incliné à angle droit par rapport à l'axe (201) du régleur automatique de timonerie (200).